(19) Europäisches Patentamt
European Patent Office
Office européen des brevets

(11) **EP 4 465 238 B1**

(12) **FASCICULE DE BREVET EUROPEEN**

(45) Date de publication et mention
de la délivrance du brevet:
**24.06.2026 Bulletin 2026/26**

(21) Numéro de dépôt: **24175631.1**

(22) Date de dépôt: **14.05.2024**

(51) Classification Internationale des Brevets (IPC):
***G06T 7/11*** *(2017.01)*

(52) Classification Coopérative des Brevets (CPC):
**G06T 7/11;** G06T 2207/10028

(54) **DISPOSITIF ET PROCEDE DE DETECTION DE REGION D'INTERET DANS UNE IMAGE**

VORRICHTUNG UND VERFAHREN ZUR DETEKTION EINES INTERESSIERENDEN BEREICHS IN EINEM BILD

DEVICE AND METHOD FOR DETECTING REGION OF INTEREST IN AN IMAGE

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priorité: **16.05.2023 FR 2304863**

(43) Date de publication de la demande:
**20.11.2024 Bulletin 2024/47**

(73) Titulaire: **Orange
92130 Issy-les-Moulineaux (FR)**

(72) Inventeurs:
• **HOTEL, Olivier
92326 CHATILLON CEDEX (FR)**
• **ROUDET, Franck
92326 CHATILLON CEDEX (FR)**
• **EXCOFFIER, David
92326 CHATILLON CEDEX (FR)**

(74) Mandataire: **Cabinet Beau de Loménie
103, rue de Grenelle
75340 Paris Cedex 07 (FR)**

(56) Documents cités:
**US-A1- 2013 215 107     US-A1- 2015 104 101
US-A1- 2019 197 719**

**Description**

Domaine Technique

La présente invention porte sur un procédé et un système pour déterminer une région d'intérêt dans une image et trouve son intérêt dans de nombreux domaines.

Technique antérieure

Il existe plusieurs méthodes pour détecter et isoler des régions d'intérêt dans les images. Une région d'intérêt (encore connue sous le l'acronyme ROI pour « Region Of Interest » en anglais) peut être typiquement une partie d'une image présentant des propriétés remarquables. Il peut notamment s'agir d'un objet présent dans l'image, comme un objet auquel s'intéresse un utilisateur ou comme un objet susceptible d'intéresser un utilisateur ou qui peut être le sujet de de traitements automatisés ultérieurs (comme un suivi (ou « tracking » en anglais)). Par exemple, il peut être utile, dans des systèmes de conduite autonome, de détecter des véhicules, des panneaux routiers, des personnes, présents sur le trajet. Dans des systèmes de logistique, il est important de pouvoir localiser des objets dans des entrepôts, les objets pouvant par ailleurs être de différentes natures. Il existe notamment des techniques interactives dans lesquelles un utilisateur sélectionne lui-même la région d'intérêt, de manière plus ou moins exacte ou précise. Il existe également plusieurs méthodes basées sur des technologies de traitement d'images. Avec le développement de l'intelligence artificielle et plus précisément des technologies de « deep learning », ces techniques de détection de région d'intérêt se sont améliorées. Cependant, il arrive parfois que la région d'intérêt ainsi identifiée ne corresponde pas totalement à un objet et n'en définisse pas les contours exacts. Diverses techniques ont été développées pour affiner la détection d'une région d'intérêt qui aurait été grossièrement identifiée par un utilisateur ou par une première méthode, au moins partiellement automatique, de traitement d'images. Il existe par exemple des techniques utilisant des cartes de profondeur et modélisant l'arrière-plan par des mixtures de Gaussiennes pour identifier le premier plan de la région d'intérêt. Ces approches utilisent des structures de données avancées (mixture de gaussiennes et de graphes) et sont particulièrement gourmandes en temps de calcul. Elles ne peuvent donc être mises en œuvre que sur certaines architectures de calcul ayant de très grosses capacités. Il existe donc un besoin de solutions plus simples à mettre en œuvre pour affiner la détermination d'une région d'intérêt.

D'autres méthodes de détermination d'une région d'intérêt à partir d'un histogramme de profondeurs sont divulguées dans les publications brevet US2013/215107A1, US2015/104101A1 et US2019/197719A1.

Exposé de l'invention

L'invention propose de pallier au moins un inconvénient de l'art antérieur en proposant un procédé comprenant :

- une obtention d'au moins une distribution des pixels d'une première zone d'une image en fonction de leur profondeur ;
- une détection d'au moins une région d'intérêt dans ladite première zone tenant compte, pour au moins un premier pic de ladite distribution de pixels, d'une hauteur relative dudit premier pic par rapport au minimum le plus élevé de ladite distribution de pixels parmi au moins un minimum local compris entre ledit premier pic et un autre pic de ladite distribution plus élevé que ledit premier pic.

Par simplification, on qualifiera dans la présente demande la « hauteur relative » d'un pic, par la hauteur relative de ce pic par rapport à ce minimum local le plus élevé.

Ainsi, la présente invention propose, de façon innovante, d'appliquer une notion similaire à celle, récemment introduite dans le domaine de la géographie, de proéminence géographique, à la détection des régions d'intérêt d'une image numérique.

Selon au moins un mode de réalisation, le procédé comprend :

- une identification de ladite première zone de l'image,
- une obtention d'une carte de profondeur de ladite première zone de l'image

Selon au moins un mode de réalisation, ladite détection prend en compte la profondeur dudit premier pic.

Selon au moins un mode de réalisation, la détection d'au moins une région d'intérêt comprend

- une détermination de la hauteur relative de pics de ladite distribution,
- un tri desdits pics dans un ordre décroissant de leur hauteur relative afin d'obtenir une seconde distribution de pixels,
- une sélection dudit premier pic pour lequel le pic de hauteur relative suivant a une profondeur plus grande

Selon au moins un mode de réalisation, la détection d'au moins une région d'intérêt comprend:

- une détermination de la hauteur relative de pics de ladite distribution,
- un tri desdits pics dans un ordre croissant de leur profondeur,
- une sélection dudit premier pic pour lequel le pic de profondeur suivant a une hauteur relative inférieure.

Selon au moins un mode de réalisation, ladite région d'intérêt est déterminée en sélectionnant l'ensemble des pixels compris entre deux minima encadrant ledit premier pic sélectionné dans ladite seconde distribution de pixels.

Selon au moins un mode de réalisation, ladite distribution est une distribution discrète ou continue.

Les caractéristiques, présentées isolément dans la présente demande en lien avec certains modes de réalisation du procédé de la présente demande peuvent être combinées entre elles selon d'autres modes de réalisation du présent procédé.

L'invention concerne également un programme d'ordinateur comprenant des instructions pour l'exécution d'un procédé comprenant:

- une obtention d'au moins une distribution des pixels d'une première zone d'une image en fonction de leur profondeur ;
- une détection d'au moins une région d'intérêt dans ladite première zone tenant compte, pour au moins un premier pic de ladite distribution de pixels, d'une hauteur relative dudit premier pic par rapport au minimum le plus élevé de ladite distribution de pixels parmi au moins un minimum local compris entre ledit premier pic et un autre pic de ladite distribution plus élevé que ledit premier pic,

lorsque ledit programme est exécuté par un ordinateur.

L'invention concerne également un support d'enregistrement lisible par un ordinateur sur lequel est enregistré un programme d'ordinateur comprenant des instructions pour l'exécution des étapes d'un procédé comprenant :

- une obtention d'au moins une distribution des pixels d'une première zone d'une image en fonction de leur profondeur ;
- une détection d'au moins une région d'intérêt dans ladite première zone tenant compte, pour au moins un premier pic de ladite distribution de pixels, d'une hauteur relative dudit premier pic par rapport au minimum le plus élevé de ladite distribution de pixels parmi au moins un minimum local compris entre ledit premier pic et un autre pic de ladite distribution plus élevé que ledit premier pic

La présente invention concerne également un dispositif comprenant un ou plusieurs processeurs configurés ensemble ou séparément pour l'exécution des étapes du procédé selon l'invention, selon l'un quelconque de ses modes de réalisations. Ainsi, la présente invention concerne un dispositif comprenant un ou plusieurs processeurs configurés ensemble ou séparément pour :

- obtenir au moins une distribution des pixels d'une première zone d'une image en fonction de leur profondeur ;
- détecter au moins une région d'intérêt dans ladite première zone tenant compte, pour au moins un premier pic de ladite distribution de pixels, d'une hauteur relative dudit premier pic par rapport au minimum le plus élevé de ladite distribution de pixels parmi au moins un minimum local compris entre ledit premier pic et un autre pic de ladite distribution plus élevé que ledit premier pic.

Brève description des dessins

D'autres caractéristiques et avantages de la présente invention ressortiront de la description faite ci-dessous, en référence aux dessins annexes qui en illustrent un exemple de réalisation dépourvu de tout caractère limitatif.

[Fig. 1] La figure 1 représente un système mettant en œuvre certains modes de réalisation de la présente invention,

[Fig. 2] La figure 2 représente une représentation d'une zone englobant une région d'intérêt dans une image,

[Fig. 3] La figure 3 représente un exemple de carte de profondeur de la zone englobante de la figure 2,

[Fig. 4] La figure 4 représente un mode de réalisation d'un procédé selon l'invention,

[Fig. 5] La figure 5 représente un premier mode de réalisation d'une distribution discrète de pixels selon l'invention,

[Fig. 6] La figure 6 représente un second mode de réalisation d'une distribution continue de pixels selon l'invention,

[Fig. 7] La figure 7 représente la notion de hauteur relative de pics telle que définie dans la présente demande,

[Fig. 8] La figure 8 représente un mode de réalisation d'un tri des pics dans l'ordre décroissant de hauteur relative,

[Fig. 9] La figure 9 représente un mode de réalisation d'un tri des pics dans l'ordre croissant de profondeur.

**Description** des modes de réalisation

La présente divulgation concerne la détection d'une région d'intérêt dans une image. Dans ce document, on entend par région d'intérêt, toute partie d'une image présentant un intérêt ou apportant un profit au regard d'une application donnée. Par exemple, dans une application relative à la conduite autonome de véhicules, une région d'intérêt peut être un obstacle tel un autre véhicule, un objet sur la chaussée, des travaux, des piétons...).

Selon certains modes de réalisation, une région d'intérêt peut correspondre à un objet qui intéresse un utilisateur et ceci pour différentes applications.

Selon certains modes de réalisation, la présente divulgation se rapporte au domaine général de la vision par ordinateur et est applicable à diverses applications utilisant des régions d'intérêt.

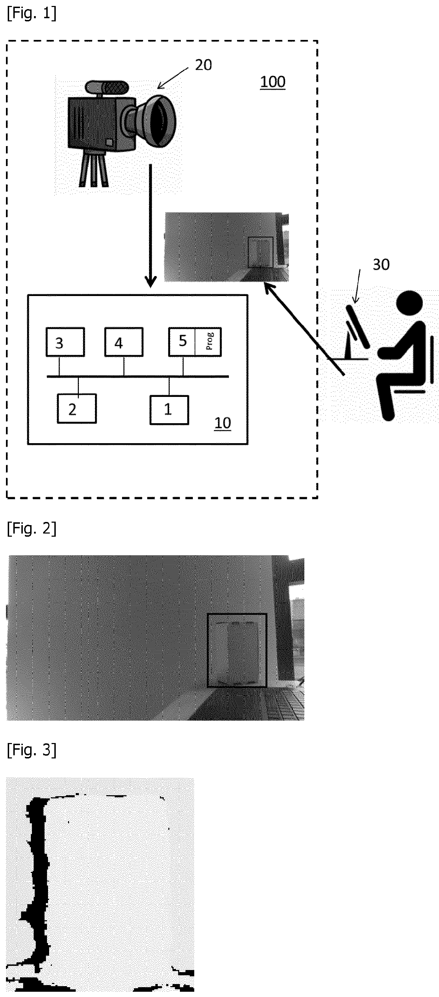

La figure 1 représente un système pouvant mettre en œuvre la présente divulgation dans certains modes de réalisation.

Une scène est capturée par des moyens de capture 20 d'au moins une image. Une scène peut être représentative d'un environnement intérieur ou extérieur et comprendre un ou plusieurs objets, animaux, personnes, arrière-plan...Ces moyens de capture peuvent prendre différentes formes selon les modes de réalisation et peuvent notamment comprendre:

-    une ou plusieurs caméras telles des caméras stéréographiques, et/ou des LIDAR (acronyme anglais de « light detection and ranging »), et/ou des RADAR (acronyme anglais de « radio detection and ranging »), et/ou des caméras plénoptiques, et/ ou des capteurs utilisant des ultra-sons connus comme des appareils ToF (acronyme anglais de « time of flight »).

Ces moyens de capture (20) d'au moins une image peuvent être associés à des moyens de traitement 10. Les moyens de traitement 10 et les moyens de capture 20 peuvent être compris dans un même dispositif unique 100 ou appartenir à des dispositifs différents couplés entre eux. Les moyens de traitement comprennent notamment des moyens permettant d'obtenir une carte de profondeur d'au moins une portion de la scène dont l'image a été capturée par les moyens de capture. Les moyens de traitement peuvent comprendre à ce titre des dispositifs de vision stéréographique, de vision radar, de vision lidar ou des dispositifs de type ToF.

Tel qu'illustré par la figure 1, les moyens de traitement peuvent disposer de l'architecture matérielle d'un ordinateur. Ainsi, les moyens de traitement 10 comprennent, notamment, un processeur 1, une mémoire vive 2, une mémoire morte 3 et une mémoire non volatile 4. Ils comportent en outre des moyens de communication 5, notamment pour communiquer avec le dispositif de capture 20 et une interface utilisateur 30.

La mémoire morte 3 constitue un support d'enregistrement conforme à au moins un mode de réalisation de la présente divulgation, lisible par le processeur 1 et sur lequel est enregistré un programme d'ordinateur PROG conforme à au moins un mode de réalisation de la présente divulgation, comportant des instructions pour l'exécution d'étapes du procédé de détermination d'une zone d'intérêt selon au moins un mode de réalisation de la présente divulgation. Le programme PROG définit des modules fonctionnels du dispositif.

L'interface utilisateur 30 peut permettre à un utilisateur d'interagir avec les moyens de capture et de traitement. L'interface utilisateur peut prendre différentes formes, notamment un ou plusieurs écrans, tactile ou non, un ou plusieurs claviers ou stylets ou tablette, téléphone mobile ou ordinateur. Sur la figure 1, l'utilisateur a sélectionné une zone englobant la zone d'intérêt.

La figure 2 représente un exemple de scène filmée par les moyens de capture 20 d'une image (comme dans cet exemple une caméra) et dans laquelle une zone est délimitée, par le rectangle noir. Cette zone vise à englober une région d'intérêt (par exemple un objet) dont il s'agit de déterminer l'emplacement précisément dans cette zone par la présente divulgation. Cette zone peut également être appelée zone englobante par la suite.

Selon certains modes de réalisation, la zone est délimitée par un utilisateur à l'aide de l'interface utilisateur 30.

Selon certains modes de réalisation, la zone est délimitée automatiquement par les moyens de traitement 10. Cette délimitation automatique peut par exemple se baser sur des méthodes basées sur de l'intelligence artificielle.

Selon certains modes de réalisation, la zone est délimitée à la fois manuellement et automatiquement. Un utilisateur peut, par exemple, indiquer aux moyens de traitement qu'il souhaite déterminer la ou les zones comprenant un certain type d'objet, une voiture par exemple, et les moyens de traitement sont alors en charge de détecter les voitures dans l'image et de délimiter les zones englobant les voitures présentes dans l'image.

Selon certains modes de réalisation, plusieurs zones englobantes peuvent être identifiées, automatiquement par les moyens de traitement ou manuellement par un utilisateur.

La figure 3 représente un exemple de carte de profondeur de la zone englobante illustrée en figure 1. Selon certains modes de réalisation, la carte de profondeur peut être obtenue par zone englobante, pour toutes ou plusieurs zones englobantes ou pour la totalité ou une partie de l'image capturée.

Une carte de profondeur peut consister en une représentation en niveaux de gris de l'image, dans laquelle le niveau de gris indique la distance à la caméra : plus une zone est sombre plus elle est proche de la caméra ou l'inverse. Une carte de profondeur est une visualisation d'une matrice (un tableau en deux dimensions par exemple) qui associe, à chaque pixel, la distance (en mètre ou tous autres unités de distance) à laquelle il se trouve de la caméra.

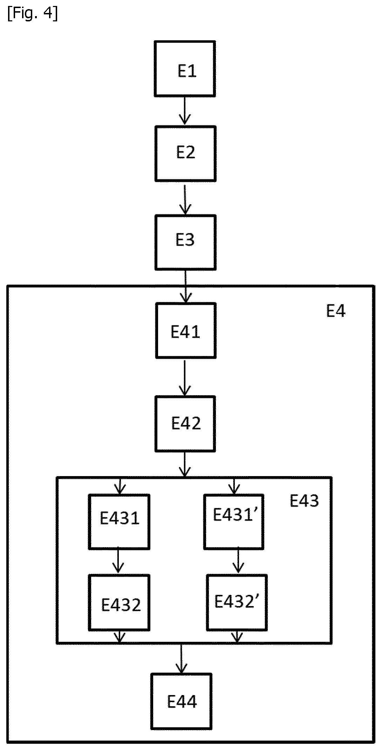

La figure 4 représente un mode de réalisation d'un procédé selon la présente divulgation.

Le procédé selon au moins un mode de réalisation de la présente divulgation peut être mis en œuvre dans un dispositif tel le dispositif 100 représenté en figure 1.

Une ou plusieurs images d'une scène sont capturées par les moyens de capture d'image identifiés en figure 1. Le présent procédé peut permettre d'identifier une ou plusieurs régions d'intérêt dans cette ou ces images.

Ainsi, lors d'une étape E1 on identifie ou on sélectionne une première zone de l'image. Par exemple, un utilisateur sélectionne sur une image une ou plusieurs zones englobant la ou les régions d'intérêt de manière approximative, ou grossière, c'est à dire que la zone englobante comprend au moins une portion d'image qui ne fait pas partie de la région d'intérêt. La zone englobante peut être une zone dont les contours peuvent suivre approximativement les contours de la région d'intérêt et/ou être de forme géométrique. Par exemple lorsque l'utilisateur sélectionne la zone manuellement (à l'aide d'un stylet ou d'une souris par exemple), la zone englobante peut être un rectangle autour d'une région d'intérêt (par exemple lorsque la région d'intérêt est elle-même plutôt de forme rectangle) (comme représenté en figure 2), un cercle autour d'une région d'intérêt (par exemple lorsque la région d'intérêt est elle-même plutôt ronde).... Cette sélection peut être réalisée au moyen de l'interface utilisateur 30 identifiée sur la figure 1. Cette sélection peut être faite par entourage de la zone d'intérêt, de manière à englober la zone d'intérêt dans sa totalité. Comme mentionné précédemment, cette sélection peut également être faite par les moyens de traitement 10 de manière automatique ou semi-automatique, par exemple en se basant sur des méthodes basées sur de l'intelligence artificielle. Les moyens de traitement peuvent être paramétrés de manière à identifier certains objets, par exemple des animaux dans une scène, par apprentissage, et à délimiter une zone englobant les animaux pour chaque animal détecté.

La zone englobante ainsi délimitée approximativement, autour de la région d'intérêt, comprend donc un ensemble de pixels dont certains font partie de la région d'intérêt à isoler ou identifier.

Une fois les zones englobantes obtenues, une carte de profondeur est obtenue pour chaque ou certaines des zones englobantes, étape E2.

Dans certains modes de réalisation, une carte de profondeur globale à l'image capturée peut être construite puis cette carte peut être segmentée en plusieurs cartes de profondeur représentant chacune une portion de l'image capturée, au moins une des cartes de profondeur représentant une portion de l'image capturée et comprenant au moins une zone englobante d'au moins une région d'intérêt pouvant être utilisée dans la suite du procédé décrit ci-après.

Selon certains modes de réalisation, lorsque plusieurs zones englobantes sont identifiées, au moins certaines des étapes du procédé ci-après peuvent être mises en œuvre simultanément en parallèle pour différentes zones englobantes identifiées.

Comme mentionné précédemment, les cartes de profondeur peuvent être par exemple obtenues par les moyens de traitement 10 ou par des dispositifs couplés à ces moyens de traitement, par des dispositifs de vision stéréographique, de vision radar, de vision lidar ou des dispositifs de type « capture de temps de vol » connus sous l'acronyme ToF, acronyme anglais de « time of flight ».

Lors des étapes suivantes, le procédé permet de déterminer au moins une région d'intérêt dans au moins une zone englobante à partir d'au moins une carte de profondeur associée à cette zone englobante.

Pour ce faire, lors d'une étape E3, on obtient une distribution ou une représentation de la distribution des pixels de la zone englobante en fonction de leur profondeur, à partir de la carte de profondeur obtenue pour la zone englobante.

La distribution obtenue peut être de différentes natures. Selon au moins un mode de réalisation, la distribution est une distribution discrète (par exemple sous la forme d'un histogramme). Selon au moins un mode de réalisation, la distribution est une distribution continue.

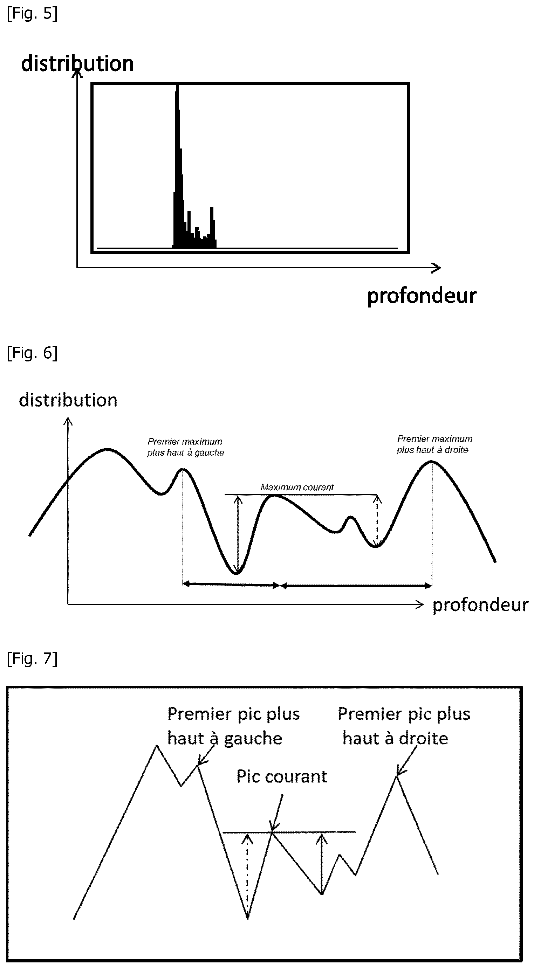

La figure 5 illustre, à titre d'exemple, une représentation sous la forme d'un histogramme.

Dans cet histogramme, l'axe des abscisses représente la distance à la caméra (donc la profondeur), et l'axe des ordonnées représente le nombre de pixels. Le pas ou la granularité choisie sur l'axe des abscisses est de 5 cm. La hauteur des barres de l'histogramme représente le nombre de pixels dans chaque intervalle, les intervalles sur l'axe des abscisses pouvant être [0, 5 cm] ; [5, 10 cm] ; [10, 15 cm]...Bien entendu cette granularité peut varier, elle peut par exemple dépendre de la profondeur maximale, plus la profondeur maximale étant grande, plus la granularité peut être grande. Elle peut également dépendre de, ou être indexée, sur la taille de la zone.

La figure 6 illustre une représentation continue. L'axe des abscisses représente la distance à la caméra, donc la profondeur, et l'axe des ordonnées représente le nombre de pixels.

Lors d'une étape E4, on détermine au moins une région d'intérêt dans au moins une des zones englobantes sélectionnées précédemment. Cette détermination tient compte pour au moins un premier pic de la distribution de pixels, d'une hauteur relative du premier pic par rapport à au moins un second des pics de la distribution de pixels, le second pic étant le minimum local le plus élevé situé dans la distribution de pixels entre le premier pic et un autre pic de la distribution plus élevé que ledit premier pic.

Selon certains modes de réalisation, la détermination prend en compte la profondeur du premier pic. Ainsi, il peut être possible de sélectionner par exemple un pic au premier plan ou un pic proche de ce premier plan.

Selon certains modes de réalisation, l'étape E4 peut comprendre une obtention (localisation ou identification) E41 de pics de la représentation. Les pics de l'histogramme sont identifiés sur la figure 5, l'indice i représentant un numéro d'intervalle sur l'axe des abscisses, un pic Pi est tel que sa hauteur $H_i$ vérifie :

$$H_{i-1} < H_i > H_{i+1}$$

Selon certains modes de réalisation, l'étape E4 peut comprendre une obtention (ou détermination) E42 d'informations ou données relatives à la hauteur, encore appelée hauteur relative par simplification, des pics de la représentation.

La figure 7 illustre la distribution des hauteurs relatives des pics (telles que déterminée à l'étape E42) de la distribution de pixels.

Dans l'exemple illustré, la hauteur relative d'un pic est le minimum de la différence entre la hauteur du pic et le minimum de l'histogramme entre le pic et les pics immédiatement supérieurs à celui-ci à droite et à gauche si ceux-ci existent. La hauteur relative du plus haut pic correspond à sa hauteur.

Sur la figure 7, la hauteur relative d'un pic $P_i$ est calculée ainsi

- on détermine le pic le plus haut à droite et le pic le plus haut à gauche du pic courant $P_i$,
- on détermine les minima $MinG_i$ et $MinD_i$ sur chacun des intervalles définis par
- $MinG_i$ : minima entre le pic courant et le pic le plus haut à gauche et
- $MinD_i$ : minima entre le pic courant et le pic le plus haut à droite,
- $MinD_i$ a une hauteur $HD_i$ et $MinG_i$ ayant une hauteur $HG_i$.
- la hauteur relative $PRO(P_i)$ du pic courant $P_i$ est donnée par :

$$[\text{MATH. 2}] \quad PRO(P_i) = Min((H_i - HD_i); (H_i - HG_i))$$

**La** définition de la hauteur relative d'un pic donnée ci-dessus s'applique également à une distribution continue mais l'identification des pics peut être différente. A cet effet, le calcul de la hauteur relative d'un pic, dans le cas d'une représentation continue, peut consister à identifier les extrema de la distribution.

Le maximum d'une fonction mathématique vérifie $f'(x) = 0$ et $f'' < 0$ ; tandis que le minimum d'une fonction $f$ vérifie $f'(x) = 0$ et $f'' > 0$ ; $f'$ et $f''$ représentant respectivement les dérivées premières et secondes de la fonction $f$.

Les minima et maxima peuvent être identifiés en résolvant l'équation $f'(x) = 0$

Cette équation peut être résolue :

- de manière analytique en résolvant directement l'équation ou
- de manière numérique en utilisant la méthode de Newton.

Le calcul de la dérivée seconde permet ensuite de distinguer les minima des maxima.

Les minima et les maxima étant connus, la hauteur relative d'un maximum peut alors être obtenue en appliquant la définition précédente.

La région d'intérêt peut être déterminée en sélectionnant le pic de premier plan ou proche du premier plan ayant une hauteur relative la plus élevée, étape E43. La région d'intérêt peut être déterminée à partir d'une représentation de la hauteur relative des pics de la distribution de pixels. Pour ce faire, il peut être possible de représenter la distribution des hauteurs relatives (et non plus la hauteur des pics de la distribution de pixels comme dans la figure 6).

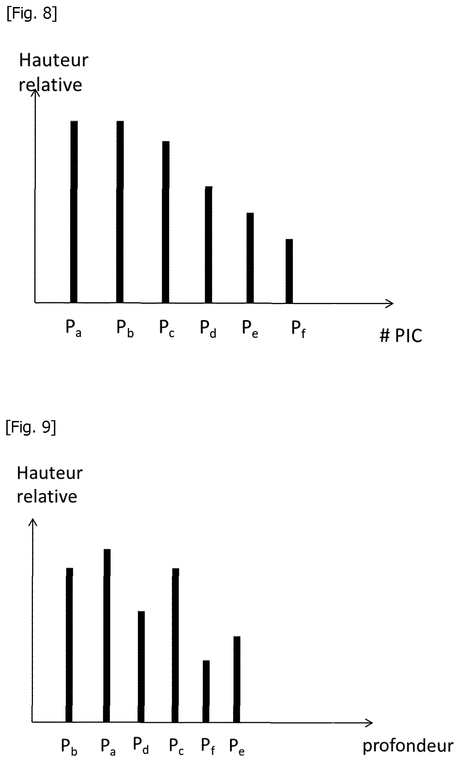

Sur les figures 8 et 9, on a représenté schématiquement 6 pics notés $P_a$, $P_b$, $P_c$, $P_d$, $P_e$, $P_f$ qui ont été précédemment identifiés lors de l'étape E41. Si la figure 5 représente une première distribution ou une représentation d'une première distribution, alors les figures 8 et 9 peuvent représenter une seconde, respectivement une troisième, distribution ou une représentation d'une seconde, respectivement une troisième, distribution.

A chacun de ces pics est associée une profondeur notée respectivement pour les pics $P_a$, $P_b$, $P_c$, $P_d$, $P_e$, $P_f$, $Prof(P_a)$, $Prof(P_b)$, $Prof(P_c)$, $Prof(P_a)$, $Prof(P_e)$, $Prof(P_f)$.

A chacun de ces pics est associée une hauteur relative notée respectivement pour les pics $P_a$, $P_b$, $P_c$, $P_d$, $P_e$, $P_f$, $HR(P_a)$, $HR(P_b)$, $HR(P_c)$, $HR(P_d)$, $HR(P_e)$, $HR(P_f)$.

Selon cet exemple, on a :

$$HR(P_a) > HR(P_b) = HR(P_c) > HR(P_d) > HR(P_e) > HR(P_f)$$

$$Prof(P_b) < Prof(P_a) < Prof(P_d) < Prof(P_C) < Prof(P_f) < Prof(P_e)$$

Selon un premier mode de réalisation de l'étape E43, on peut trier, E431, les pics dans un ordre décroissant de leur hauteur relative comme illustré sur la figure 8, de manière schématique, afin de faciliter l'identification du pic de premier plan ou proche de ce premier plan ayant une hauteur relative la plus élevée.

On parcourt les pics dans le sens décroissant de hauteur relative et pour chaque pic on compare la profondeur du pic courant avec la profondeur du pic suivant le pic courant et on sélectionne, étape E432 le premier pic pour lequel le pic suivant a une profondeur plus grande. Ainsi, le pic sélectionné dans cet exemple est le pic $P_b$, car le pic $P_a$, a une hauteur relative plus grande mais a une profondeur moins élevée, et les pics suivants ont tous une profondeur plus élevée. On peut noter que le pic $P_c$ a une hauteur relative identique mais une profondeur plus élevée, il n'est donc pas sélectionné. Ainsi, le pic $P_b$ représente ici le pic de premier plan.

Selon un second mode de réalisation de l'étape E43, on peut trier, E431', les pics dans un ordre croissant de leur profondeur comme illustré sur la figure 9, de manière schématique, afin de faciliter l'identification du pic de premier plan ou proche du premier plan ayant une hauteur relative la plus élevée.

On parcourt les pics dans le sens croissant de profondeur on compare la hauteur relative du pic courant avec la hauteur relative du pic suivant le pic courant et on sélectionne, étape E432' le premier pic pour lequel le pic suivant a une hauteur relative plus faible. Ainsi, le pic sélectionné dans cet exemple est le pic $P_a$, car le pic $P_b$ qui a une profondeur plus élevée a une hauteur relative plus grande. On peut noter que le pic $P_c$, a une hauteur relative identique mais une profondeur plus élevée, il n'est donc pas sélectionné. Ainsi, le pic $P_a$ est ici un pic non pas au premier plan mais proche du premier plan. Par exemple, on peut filtrer ainsi des éléments parasites présents au premier plan.

On peut noter dans cette représentation dans l'ordre croissant de profondeur, que, dans certains modes de réalisation, si deux pics ont une profondeur associée identique, alors à profondeur identique, le pic ayant une hauteur relative la plus importante est sélectionné.

La zone d'intérêt est déterminée à partir de la représentation obtenue, étape E43.

Selon certains modes de réalisation, la zone d'intérêt est obtenue en sélectionnant, étape E44, un ensemble de pixels autour du pic sélectionné lors de l'étape E43.

Selon certains modes de réalisation, cet ensemble de pixels est constitué des pixels compris entre les deux minimums encadrant le pic sélectionné lors de l'étape E43.

Certaines applications de cette divulgation peuvent trouver intérêt dans l'industrie manufacturière, et notamment dans la vérification de la conformité d'une pièce produite sur des chaines de fabrication. La présente divulgation peut en effet aider à détecter précisément une pièce et donc de déterminer sa forme, sa taille et de vérifier si elle est conforme à un attendu ou à un cahier des charges et ceci de manière au moins partiellement automatique (sans intervention humaine par exemple). La connaissance de la taille et de la localisation des objets peut également permettre d'aider à stabiliser et à préciser les mouvements de robots manipulant ces objets.

D'autres applications peuvent concerner le domaine de la logistique. Certains modes de réalisation de la présente divulgation peuvent rendre possible le traçage et la localisation de biens dans des entrepôts. La connaissance de la taille des objets, peut aider à estimer (par exemple à optimiser) l'espace de stockage nécessaire à leur stockage et peut donc participer à la gestion de flux dans les entrepôts.

D'autres applications peuvent concerner la conduite autonome de véhicules en permettant de déterminer des obstacles sur la route par exemple, une région d'intérêt pouvant représenter un obstacle (autres véhicules, objets, travaux, piétons...).

D'autres applications peuvent concerner la construction de cartes d'un environnement physique pour permettre la navigation de robots, de drones et de véhicules autonomes en présence d'obstacles.

**Revendications**

1. Procédé mis en œuvre par ordinateur comprenant :

   - une obtention d'au moins une distribution des pixels d'une première zone d'une image en fonction de leur profondeur ;
   - une détection d'au moins une région d'intérêt dans ladite première zone tenant compte, pour au moins un premier pic de ladite distribution de pixels, d'une hauteur relative dudit premier pic de ladite distribution de pixels par rapport au minimum le plus élevé parmi au moins un minimum local compris entre ledit premier pic et un autre pic de ladite distribution plus élevé que ledit premier pic.

2. Dispositif comprenant un ou plusieurs processeurs configurés ensemble ou séparément pour :

   - obtenir au moins une distribution des pixels d'une première zone d'une image en fonction de leur profondeur ;
   - détecter au moins une région d'intérêt dans ladite première zone tenant compte, pour au moins un premier pic de ladite distribution de pixels, d'une hauteur relative dudit premier pic de ladite distribution de pixels par rapport au minimum le plus élevé parmi au moins un minimum local compris entre ledit premier pic et un autre pic de ladite distribution plus élevé que ledit premier pic.

3. Procédé selon la revendication 1 comprenant, ou dispositif selon la revendication 2, ledit un ou plusieurs processeurs étant configurés pour :

   - une obtention d'une carte de profondeur de ladite première zone de l'image.

4. Procédé selon l'une des revendications 1 ou 3 comprenant, ou dispositif selon l'une des revendications 2 ou 3, ledit un ou plusieurs processeurs étant configurés pour, la prise en compte de ladite profondeur dudit premier pic lors de ladite détection.

5. Procédé selon l'une des revendications 1 ou 3 à 4 comprenant, ou dispositif selon l'une des revendications 2 à 4, ledit un ou plusieurs processeurs étant configurés pour, la détection d'au moins une région d'intérêt à partir

   - d'une détermination de la hauteur relative de pics de ladite distribution,
   - d'un tri desdits pics dans un ordre décroissant de leur hauteur relative afin d'obtenir une seconde distribution de pixels,
   - d'une sélection dudit premier pic pour lequel le pic de hauteur relative suivant a une profondeur plus grande.

6. Procédé selon l'une des revendications 1 ou 3 à 4 comprenant, ou dispositif selon l'une des revendications 2 à 4, ledit un ou plusieurs processeurs étant configurés pour, la détection d'au moins une région d'intérêt à partir

   - d'une détermination de la hauteur relative de pics de ladite distribution,
   - d'un tri desdits pics dans un ordre croissant de leur profondeur,
   - d'une sélection dudit premier pic pour lequel le pic de profondeur suivant a une hauteur relative inférieure.

7. Procédé selon la revendication 5 comprenant, ou dispositif selon la revendication 5, ledit un ou plusieurs processeurs étant configurés pour, la détermination de ladite région d'intérêt en sélectionnant l'ensemble des pixels compris entre deux minima encadrant ledit premier pic sélectionné dans ladite seconde distribution de pixels.

8. Procédé selon l'une des revendications précédentes ou dispositif selon l'une des revendications précédentes, où ladite distribution est une distribution discrète ou continue.

9. Programme d'ordinateur comprenant des instructions pour l'exécution un procédé comprenant:

   - une obtention d'au moins une distribution des pixels d'une première zone d'une image en fonction de leur profondeur ;
   - une détection d'au moins une région d'intérêt dans ladite première zone tenant compte, pour au moins un premier pic de ladite distribution de pixels, d'une hauteur relative dudit premier pic de ladite distribution de pixels par rapport au minimum le plus élevé parmi au moins un minimum local compris entre ledit premier pic et un autre pic de ladite distribution plus élevé que ledit premier pic,

lorsque ledit programme est exécuté par un ordinateur.

10. Support d'enregistrement lisible par un ordinateur sur lequel est enregistré un programme d'ordinateur comprenant des instructions pour l'exécution des étapes d'un procédé comprenant :

- une obtention d'au moins une distribution des pixels d'une première zone d'une image en fonction de leur profondeur ;
- une détection d'au moins une région d'intérêt dans ladite première zone tenant compte, pour au moins un premier pic de ladite distribution de pixels, d'une hauteur relative dudit premier pic de ladite distribution de pixels par rapport au minimum le plus élevé parmi au moins un minimum local compris entre ledit premier pic et un autre pic de ladite distribution plus élevé que ledit premier pic.

**Patentansprüche**

1. Computerimplementiertes Verfahren, das Folgendes aufweist:

- Erhalten mindestens einer Verteilung der Pixel einer ersten Zone eines Bildes als eine Funktion ihrer Tiefe;
- Erkennen mindestens eines Bereichs von Interesse in der ersten Zone, wobei für mindestens einen ersten Peak der Pixelverteilung eine relative Höhe dieses ersten Peaks der Pixelverteilung im Verhältnis zum höchsten Minimum unter mindestens einem lokalen Minimum berücksichtigt wird, das zwischen dem ersten Peak und einem anderen Peak der Verteilung liegt, der höher ist als der erste Peak.

2. Vorrichtung mit einem oder mehreren Prozessoren, die zusammen oder getrennt konfiguriert sind zum:

- Erhalten mindestens einer Verteilung der Pixel einer ersten Zone eines Bildes als eine Funktion ihrer Tiefe;
- Erkennen mindestens eines Bereichs von Interesse in der ersten Zone, wobei für mindestens einen ersten Peak der Pixelverteilung eine relative Höhe dieses ersten Peaks der Pixelverteilung im Verhältnis zum höchsten Minimum unter mindestens einem lokalen Minimum berücksichtigt wird, das zwischen dem ersten Peak und einem anderen Peak der Verteilung liegt, der höher ist als der erste Peak.

3. Verfahren nach Anspruch 1 oder Vorrichtung nach Anspruch 2, wobei der eine oder die mehreren Prozessoren konfiguriert sind zum:

- Erhalten einer Tiefenkarte der ersten Zone des Bildes.

4. Verfahren nach einem der Ansprüche 1 oder 3 oder Vorrichtung nach einem der Ansprüche 2 oder 3, wobei der eine oder die mehreren Prozessoren konfiguriert sind zum Berücksichtigen der Tiefe des ersten Peaks beim Erkennen.

5. Verfahren nach einem der Ansprüche 1 oder 3 bis 4 oder Vorrichtung nach einem der Ansprüche 2 bis 4, wobei der eine oder die mehreren Prozessoren konfiguriert sind zum Erkennen mindestens eines Bereichs von Interesse, ausgehend von:

- einem Bestimmen der relativen Höhe der Peaks der Verteilung,
- einem Sortieren der Peaks in absteigender Reihenfolge ihrer relativen Höhe, um eine zweite Pixelverteilung zu erhalten,
- einem Auswählen des ersten Peaks, für den der Peak mit darauf folgender relativer Höhe eine größere Tiefe aufweist.

6. Verfahren nach einem der Ansprüche 1 oder 3 bis 4 oder Vorrichtung nach einem der Ansprüche 2 bis 4, wobei der eine oder die mehreren Prozessoren konfiguriert sind zum Erkennen mindestens eines Bereichs von Interesse, ausgehend von:

- einem Bestimmen der relativen Höhe der Peaks der Verteilung,
- einem Sortieren der Peaks in zunehmender Reihenfolge ihrer Tiefe,
- einem Auswählen des ersten Peaks, für den der Peak mit darauf folgender Tiefe eine geringere relativen Höhe aufweist.

7. Verfahren nach Anspruch 5 oder Vorrichtung nach Anspruch 5, wobei der eine oder die mehreren Prozessoren konfiguriert sind zum Bestimmen des Bereichs von Interesse durch Auswählen aller Pixel, die zwischen zwei Minima liegen, welche den ersten ausgewählten Peak in der zweiten Pixelverteilung umrahmen.

8. Verfahren nach einem der vorhergehenden Ansprüche oder Vorrichtung nach einem der vorhergehenden Ansprüche, wobei es sich bei der Verteilung um eine diskrete oder kontinuierliche Verteilung handelt.

9. Computerprogramm, das Anweisungen zum Ausführen eines Verfahrens aufweist, das Folgendes aufweist:

- Erhalten mindestens einer Verteilung der Pixel einer ersten Zone eines Bildes als eine Funktion ihrer Tiefe;
- Erkennen mindestens eines Bereichs von Interesse in der ersten Zone, wobei für mindestens einen ersten Peak der Pixelverteilung eine relative Höhe dieses ersten Peaks der Pixelverteilung im Verhältnis zum höchsten Minimum unter mindestens einem lokalen Minimum berücksichtigt wird, das zwischen dem ersten Peak und einem anderen Peak der Verteilung liegt, der höher ist als der erste Peak, wenn das Programm von einem Computer ausgeführt wird.

10. Computerlesbares Speichermedium, auf dem ein Computerprogramm gespeichert ist, das Anweisungen zur Ausführung der Schritte eines Verfahrens aufweist zum:

- Erhalten mindestens einer Verteilung der Pixel einer ersten Zone eines Bildes als eine Funktion ihrer Tiefe;
- Erkennen mindestens eines Bereichs von Interesse in der ersten Zone, wobei für mindestens einen ersten Peak der Pixelverteilung eine relative Höhe dieses ersten Peaks der Pixelverteilung im Verhältnis zum höchsten Minimum unter mindestens einem lokalen Minimum berücksichtigt wird, das zwischen dem ersten Peak und einem anderen Peak der Verteilung liegt, der höher ist als der erste Peak.

## Claims

1. Computer-implemented method comprising:

- obtaining at least one distribution of the pixels of a first area of an image depending on their depth;
- detecting at least one region of interest in said first area taking account, for at least one first peak of said pixel distribution, of a relative height of said first peak of said pixel distribution with respect to the highest minimum among at least one local minimum comprised between said first peak and another peak of said distribution which is higher than said first peak.

2. Device comprising one or more processors configured together or separately to:

- obtain at least one distribution of the pixels of a first area of an image depending on their depth;
- detect at least one region of interest in said first area taking account, for at least one first peak of said pixel distribution, of a relative height of said first peak of said pixel distribution with respect to the highest minimum among at least one local minimum comprised between said first peak and another peak of said distribution which is higher than said first peak.

3. Method according to Claim 1 comprising, or device according to Claim 2, said one or more processors being configured for:

- obtaining a depth map of said first area of the image.

4. Method according to one of Claims 1 and 3 comprising, or device according to one of Claims 2 and 3, said one or more processors being configured for, taking into account said depth of said first peak during said detection.

5. Method according to one of Claims 1 or 3 and 4 comprising, or device according to one of Claims 2 to 4, said one or more processors being configured for, detecting at least one region of interest on the basis of

- determining the relative height of peaks of said distribution,
- sorting said peaks in decreasing order of their relative height in order to obtain a second pixel distribution,
- selecting said first peak for which the following peak in relative height has a greater depth.

6. Method according to one of Claims 1 or 3 and 4 comprising, or device according to one of Claims 2 to 4, said one or more processors being configured for, detecting at least one region of interest on the basis of

- determining the relative height of peaks of said distribution,
- sorting said peaks in increasing order of their depth,
- selecting said first peak for which the following peak in depth has a lesser relative height.

7. Method according to Claim 5 comprising, or device according to Claim 5, said one or more processors being configured for, determining said region of interest by selecting all of the pixels comprised between two minima flanking said first selected peak in said second pixel distribution.

8. Method according to one of the preceding claims or device according to one of the preceding claims, where said distribution is a discrete or continuous distribution.

9. Computer program comprising instructions for executing a method comprising:

- obtaining at least one distribution of the pixels of a first area of an image depending on their depth;
- detecting at least one region of interest in said first area taking account, for at least one first peak of said pixel distribution, of a relative height of said first peak of said pixel distribution with respect to the highest minimum among at least one local minimum comprised between said first peak and another peak of said distribution which is higher than said first peak, when said program is executed by a computer.

10. Computer-readable storage medium on which is stored a computer program comprising instructions for executing the steps of a method comprising:

- obtaining at least one distribution of the pixels of a first area of an image depending on their depth;
- detecting at least one region of interest in said first area taking account, for at least one first peak of said pixel distribution, of a relative height of said first peak of said pixel distribution with respect to the highest minimum among at least one local minimum comprised between said first peak and another peak of said distribution which is higher than said first peak.

[Fig. 1]

[Fig. 2]

[Fig. 3]

[Fig. 4]

```
                    ┌──────┐
                    │  E1  │
                    └──────┘
                        │
                        ▼
                    ┌──────┐
                    │  E2  │
                    └──────┘
                        │
                        ▼
                    ┌──────┐
                    │  E3  │
                    └──────┘
                        │
  ┌─────────────────────┼──────────────────────────┐
  │                     ▼                        E4 │
  │                 ┌──────┐                        │
  │                 │ E41  │                        │
  │                 └──────┘                        │
  │                     │                           │
  │                     ▼                           │
  │                 ┌──────┐                        │
  │                 │ E42  │                        │
  │                 └──────┘                        │
  │                     │                           │
  │  ┌──────────────────┼─────────────────────┐    │
  │  │        ▼                    ▼       E43 │    │
  │  │    ┌──────┐             ┌───────┐       │    │
  │  │    │ E431 │             │ E431' │       │    │
  │  │    └──────┘             └───────┘       │    │
  │  │        │                    │           │    │
  │  │        ▼                    ▼           │    │
  │  │    ┌──────┐             ┌───────┐       │    │
  │  │    │ E432 │             │ E432' │       │    │
  │  │    └──────┘             └───────┘       │    │
  │  │        │                    │           │    │
  │  └────────┼────────────────────┼───────────┘    │
  │           ▼                                      │
  │       ┌──────┐                                   │
  │       │ E44  │                                   │
  │       └──────┘                                   │
  └─────────────────────────────────────────────────┘
```

[Fig. 5]

distribution

profondeur

[Fig. 6]

distribution

Premier maximum
plus haut à gauche

Premier maximum
plus haut à droite

Maximum courant

profondeur

[Fig. 7]

Premier pic plus
haut à gauche

Premier pic plus
haut à droite

Pic courant

[Fig. 8]

Hauteur
relative

$P_a$    $P_b$    $P_c$    $P_d$    $P_e$    $P_f$     # PIC

[Fig. 9]

Hauteur
relative

$P_b$   $P_a$   $P_d$   $P_c$   $P_f$   $P_e$    profondeur

## RÉFÉRENCES CITÉES DANS LA DESCRIPTION

**Documents brevets cités dans la description**

- US 2013215107 A1
- US 2015104101 A1
- US 2019197719 A1